# EUROPEAN PATENT APPLICATION

(11) **EP 2 717 125 A1**
(43) Date of publication of application: **09.04.2014**
(21) Application number: 12187456.4
(22) Date of filing: 05.10.2012
(51) Int. Cl.: G06F 3/038, G06F 3/0354, G06F 1/32

(54) **Method and apparatus pertaining to user-sensed transmission power control in a stylus**

(71) Applicant: BlackBerry Limited, Waterloo, ON N2K 0A7 (CA)
(72) Inventor: Singh, Amit Pal, Waterloo, Ontario N2L 3W8 (CA); Nandakumar, Rohan Michael, Waterloo, Ontario N2L 3W8 (CA)
(74) Representative: Bryn-Jacobsen, Caelia

(57) **Abstract**

A stylus includes a wireless transmitter and a user sensor configured to detect a stylus-user's proximity (such as, for example, the proximity of the user's hand). A control circuit adjusts transmission power for the wireless transmitter as a function, at least in part, of the stylus-user's proximity.

## Description

### Field of Technology

The present disclosure relates to styli and more particularly to active styli that include a wireless transmitter.

### Background

Various kinds of active scribing surfaces are known. Some scribing surfaces are particularly configured to work with a corresponding stylus. Generally speaking, a stylus is typically a hand-held writing utensil that often (but not exclusively) has a pencil-like elongated form factor and that includes at least one pointed end configured to interact with a scribing surface. Using a stylus as an input mechanism with, for example, a display offers a variety of advantages over a fingertip including the opportunity for increased precision as well as an expression modality that accords with the user's own past experience with a pencil or pen.

In some cases the stylus comprises an active device that transmits a signal. This signal serves, for example, as a location beacon that the scribing surface device utilizes, for example, to confirm the proximity of the stylus and/or to facilitate accurate tracking of the stylus's movement with respect to the scribing surface. In such a case the stylus typically includes a portable power supply such as one or more batteries to power the necessary transmitter.

Limiting power consumption in such a device can be important in order to extend the useful operating lifetime per charge or per battery. Presumptions regarding typical operating circumstances are often employed to make design choices in support of energy conservation. Transmission power levels are often selected based on such presumptions and therefore represent a compromise that attempts to balance reliable transmission/reception with minimized energy consumption.

Unfortunately, such presumptions can and will vary from actual live operating circumstances. Such deviations from the expected can lead, in turn, to an unnecessary expenditure of energy or weak reception that leads to poor performance. Both of these results can lead to user dissatisfaction.

### Brief Description of the Drawings

FIG. 1 is a flow diagram in accordance with the disclosure.

FIG. 2 is a block diagram schematic view in accordance with the disclosure.

FIG. 3 is a block diagram schematic view in accordance with the disclosure.

FIG. 4 is a perspective view in accordance with the disclosure.

FIG. 5 is a perspective view in accordance with the disclosure.

### Detailed Description

The following describes an apparatus and method pertaining to a stylus having a wireless transmitter. The stylus includes a user sensor configured to detect a stylus-user's proximity (such as, for example, the proximity of the user's hand) and a control circuit that adjusts transmission power for the wireless transmitter as a function, at least in past, of the stylus-user's proximity.

Such a user sensor can comprise, for example, a capacitive sensor. By one approach this sensor is configured and/or located to detect the stylus-user's proximity to a transmission antenna as comprises a part of the wireless transmitter.

So configured, the control circuit can adjust the transmission power upwardly upon detecting that the stylus user is located sufficiently close to at least some predetermined portion of the wireless transmitter (such as the aforementioned antenna) and can adjust the transmission power downwardly upon detecting that the stylus user is located sufficiently distant from the predetermined portion of the wireless transmitter.

Accordingly, these teachings permit the transmission power of the stylus's wireless transmitter to be adjusted in a manner that dynamically responds to the transmission interference that can occur due to shielding that occurs due to proximity of the user's hand to the wireless transmitter's antenna. When such proximity is likely to reduce the effective transmission range of the wireless transmitter the control circuit can permit an increased, higher-level of energy expenditure in favor of transmitting the stylus's location information. When, however, such proximity-based interference is less of a concern, the control circuit can permit a reduced, lower-level of energy expenditure to thereby help conserve available energy reserves.

These teachings are highly flexible in practice and can be employed with a variety of stylus types and approaches to wireless transmission. These teachings are also highly scalable and can serve in conjunction with a range of transmission power levels.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

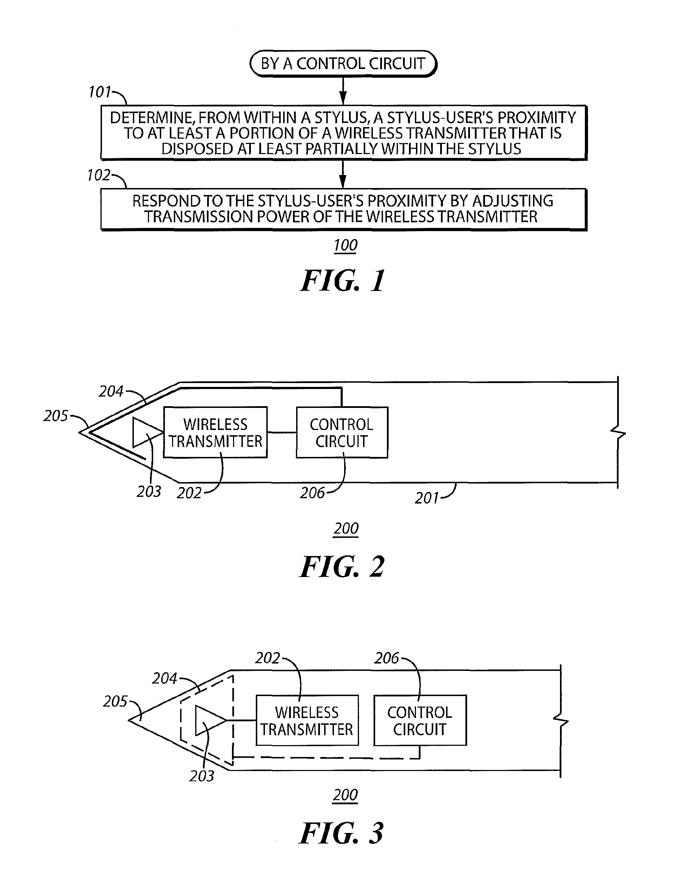

FIG. 1 presents a process 100 that accords with many of these teachings. For the sake of an illustrative example it will be presumed that a control circuit of choice carries out this process 100. FIG. 2 provides a useful illustrative example in these regards.

In FIG. 2, a stylus 200 comprises a stylus body 201 having a wireless transmitter 202 (that includes a corresponding antenna 203) disposed therein. This wireless transmitter 202 comprises, in this example, a radio-frequency wireless transmitter that is configured to transit a stylus-location signal of choice. Numerous approaches are known in these regards. As the present teachings are not overly sensitive to the selection of any particular choice as to these various approaches, further elaboration in these regards is not provided here for the sake of brevity.

It will be noted, however, that the aforementioned antenna 203 is located near to the scribing tip 205 of the stylus 200 in this example. Such a location can be beneficial as this location places the antenna 203 relatively close to the scribing surface (not shown) that often also includes a corresponding receiver to receive the stylus-location signal being transmitted via the antenna 203. Such a location, however, also tends to place the antenna 203 near where at least some users may sometimes grip the stylus 200 during use.

This illustrative example of a stylus 200 also includes a control circuit 206 that is also disposed within the stylus body 201 and that operably couples to the aforementioned wireless transmitter 202 as well as a user sensor 204. Such a control circuit 206 can comprise a fixed-purpose hard-wired platform or can comprise a partially or wholly programmable platform. These architectural options are well known and understood in the art and require no further description here. This control circuit 206 is configured (for example, by using corresponding programming as will be well understood by those skilled in the art) to carry out one or more of the steps, actions, and/or functions described herein.

The user sensor 204 is configured to detect a stylus-user's proximity (by sensing, for example, proximity of the user's hand). Various sensors exist that will perform adequately in such service. Here, for the sake of this illustrative example, the user sensor 204 comprises a capacitive sensor as is known in the art.

It will further be noted, however, that such a user sensor 204 can be disposed as desired to suit the needs and/or limitations of a given application setting. In the example shown in FIG. 2, for example, the user sensor 204 is disposed within the scribing tip 205 of the stylus 200. Other possibilities exist, however. One such alternative approach appears in FIG. 3 where the sensor has a truncated form factor as compared to the example of FIG. 2. Accordingly, it will be understood that the form-factor specifics used in these examples are not to be taken as limiting examples.

It should also be noted that these teachings will accommodate employing two or more user sensors if desired. This can include using a plurality of user sensors that are all of a same kind as well as using a mix of different kinds of user sensors.

Referring again to FIG. 1, pursuant to this process 100 such a control circuit 206 determines 101, from within the stylus 200, a stylus-user's proximity to at least a portion of the wireless transmitter 202 (in this case, the wireless transmitter's antenna 203) that is also disposed at least partially within the stylus 200. Such a determination 101 can be based, for example, upon input received from the aforementioned user sensor 204 regarding the user's proximity to the transmission antenna 203.

This process 100 then has the control circuit 206 respond 102 to the stylus-user's proximity by adjusting transmission power of the wireless transmitter 202 when and as appropriate.

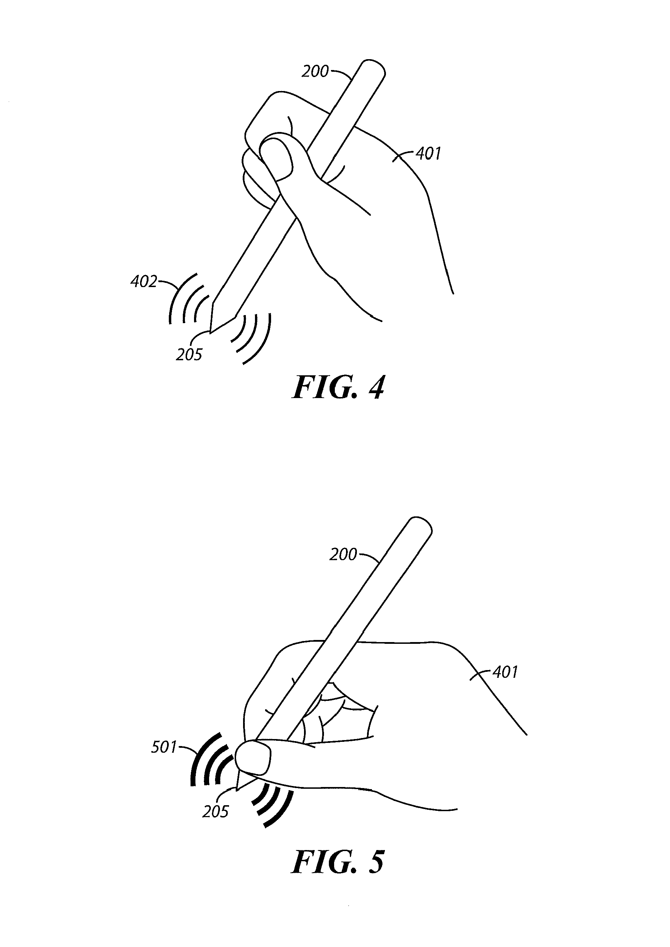

With reference to FIG. 4, this responsive adjustment can comprise, by way of example, adjusting the transmission power 402 downwardly upon detecting that the stylus user 401 is located sufficiently distant from the predetermined, monitored portion of the wireless transmitter (i.e., the transmission antenna 203 in this example). As another illustrative example, and referring to FIG. 5, this responsive adjustment can comprise adjusting the transmission power 501 upwardly upon detecting that the stylus user 401 is located sufficiently close to that same predetermined, monitored portion of the wireless transmitter (again, the transmission antenna 203).

To be clear, in the foregoing examples the control circuit 206 is responding to a determination that the user's proximity to the monitored portion has changed (for example, to a more proximal position or to a more distant position). When the control circuit 206 has already adjusted the transmission power to a suitable level to correspond to a particular proximity of the user to the monitored portion and is now simply detecting that the same proximity is persisting, the control circuit 206 can respond by maintaining the presently-utilized transmission power. Similarly, when the control circuit 206 detects only a small change in proximity (either closer to, or further from, the monitored portion), the control circuit 206 may nevertheless be configured to continue to maintain a present transmission power setting unless and until the aggregated change in proximity over time passes some previously-established threshold distance of interest.

Accordingly, these teachings will accommodate the use of as many, or as few, transmission power settings as may be desired. There may, for example, be only a "high" transmission power setting and a "low" transmission power setting and the control circuit 206 selects which transmission power setting to employ by employing a single proximity threshold. Or, the control circuit 206 may have five different transmission power settings available for selection and a corresponding plurality of differing proximity thresholds used to determine when, and which, transmission power setting to employ.

So configured, such a stylus can use a power-conserving low transmission power when the user happens to grip the stylus 200 in a manner that holds the user's hand at a distance from the transmission antenna 203. When the user grips the stylus 200 in a way that places the user's hand near (or even effectively encircling) the transmission antenna 203, the stylus's signals can be transmitted using a sufficiently high power to better ensure correct reception by, for example, the corresponding scribing-surface device. As a result, the resultant stylus need not suffer an unduly-shortened battery life or unreliable performance due to built-in design compromises regarding the transmission power level and/or antenna placement. Instead, the stylus 200 can dynamically (and transparently) react to its own operating circumstances and employ a suitable transmission power, thus better ensuring power conservation when possible and effective, reliable transmissions regardless of the user's proclivities with respect to holding and wielding the stylus 200.

These teachings can be employed to good effect with any of a variety of active-transmission methodologies and architectures. The described approaches are also highly flexible in practice and will accommodate any number of modifications and variations to suit various needs and/or to take advantage of available opportunities.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus body (201);
a wireless transmitter (202) disposed at least partially within the stylus body;
a user sensor (204) configured to detect a stylus-user's (401) proximity;
a control circuit (206) supported by the stylus body and operably coupled to the wireless transmitter and the user sensor and configured to adjust transmission power for the wireless transmitter as a function, at least in part, of the stylus-user's proximity.

2. The apparatus of claim 1 wherein the wireless transmitter comprises a radio-frequency wireless transmitter.

3. The apparatus of claim 1 wherein the wireless transmitter is configured to transmit a stylus-location signal.

4. The apparatus of claim 1 wherein the user sensor comprises, at least in part, a capacitive sensor.

5. The apparatus of claim 1 wherein wireless transmitter includes a transmission antenna (203) and wherein the user sensor is configured to detect the stylus-user's proximity to the transmission antenna.

6. The apparatus of claim 1 wherein the control circuit is configured to adjust the transmission power upwardly upon detecting that the stylus user is located sufficiently close to at least some predetermined portion of the wireless transmitter and to adjust the transmission power downwardly upon detecting that the stylus user is located sufficiently distant from the predetermined portion of the wireless transmitter.

7. A method comprising:
by a control circuit:
determining (101), from within a stylus (200), a stylus-user's proximity to at least a portion of a wireless transmitter (202) that is disposed at least partially within the stylus;
responding (102) to the stylus-user' proximity by adjusting transmission power of the wireless transmitter.

8. The method of claim 7 wherein determining the stylus-user' proximity comprises, at least in part, using a capacitive sensor (204) to detect the stylus-user' proximity.

9. The method of claim 7 wherein the portion of the wireless transmitter comprises a transmission antenna (203).

10. The method of claim 7 wherein adjusting the transmission power of the wireless transmitter comprises using a relatively higher transmission power when a part of the user is sufficiently close to a transmission antenna for the wireless transmitter.
